(19) Europäisches Patentamt
European Patent Office
Office européen des brevets

(11) EP 1 648 131 B1

(12) EUROPÄISCHE PATENTSCHRIFT

(45) Veröffentlichungstag und Bekanntmachung des Hinweises auf die Patenterteilung:
**20.06.2007 Patentblatt 2007/25**

(51) Int Cl.:
***H04L 27/26*** *(2006.01)*

(21) Anmeldenummer: **05021908.8**

(22) Anmeldetag: **08.10.2005**

(54) **Verfahren zur Unterdrückung spektraler Nebenzipfel in auf OFDM beruhenden Übertragungssystemen**

Method for suppressing the side lobes in OFDM communication systems

Méthode pour l'élimination des lobes secondaires dans les systèmes de communication OFDM

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.10.2004 DE 102004049803**

(43) Veröffentlichungstag der Anmeldung:
**19.04.2006 Patentblatt 2006/16**

(73) Patentinhaber: **Deutsches Zentrum für Luft- und Raumfahrt e.V.**
**51147 Köln (DE)**

(72) Erfinder:
- **Cosovic, Ivan**
**80339 München (DE)**
- **Brandes, Sinja**
**85375 Neufahrn (DE)**
- **Schnell, Michael, Dr.**
**82205 Gilching (DE)**

(74) Vertreter: **von Kirschbaum, Albrecht**
**Patentanwalt**
**Postfach 1520**
**82102 Germering (DE)**

(56) Entgegenhaltungen:
**EP-A- 1 422 897**
**WO-A-00/38386**
**US-A- 6 035 000**

- **BALDEMAIR, R.: "Suppression of narrow frequency bands in multicarrier transmission systems" EUSIPCO- PROCEEDINGS OF THE X EUROPEAN SIGNAL PROCESING CONFERENCE, 4. September 2000 (2000-09-04), Seiten 553-556, XP002373038 Tampere, Finland**
- **YOO H ET AL: "EDGE SIDELOBE SUPPRESSOR SCHEME FOR OFDMA UPLINK SYSTEMS" IEEE COMMUNICATIONS LETTERS, IEEE SERVICE CENTER, PISCATAWAY, NJ, US, Bd. 7, Nr. 11, November 2003 (2003-11), Seiten 534-536, XP001185628 ISSN: 1089-7798**
- **COSOVIC I ET AL: "A technique for sidelobe suppression in OFDM systems" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28. November 2005 (2005-11-28), Seiten 204-208, XP010881287 ISBN: 0-7803-9414-3**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 648 131 B1

**Beschreibung**

Die vorliegende Erfindung betrifft ein Verfahren zur Unterdrückung spektraler Nebenzipfel des Sendesignals in drahtlosen oder drahtgebundenen OFDM (Orthogonal Frequency-Division Multiplexing)-Übertragungssystemen und in Mehrträger-Obertragungssystemen, die OFDM verwenden oder auf OFDM basieren, wobei Unterträger mit Gewichtungsfaktoren multipliziert werden.

Das Spektrum eines OFDM-Sendesignals weist bekanntlich starke Nebenzipfel auf. Dies bedeutet, dass bei einer OFDM-Übertragung außerhalb der Übertragungsbandbreite beachtliche Sendeleistungen abgestrahlt werden.

Zur Unterdrückung spektraler Nebenzipfel bei OFDM gibt es gemäß dem Stand der Technik verschiedene Möglichkeiten.

Spektrale Nebenzipfel lassen sich insbesondere durch Filterungsmaßnahmen unterdrücken. Derartige Maßnahmen bedeuten zum einen zusätzlichen Realisierungsaufwand und damit zusätzliche Kosten. Zum anderen wird das Sendesignal durch den Filtervorgang beeinflusst und es können Störungen auftreten. Insbesondere wird durch die Filterung das OFDM-Symbol im Zeitbereich verlängert, wodurch störende Symbolinterferenzen zwischen aufeinander folgenden OFDM-Symbolen entstehen können.

Eine Unterdrückung spektraler Nebenzipfel lässt sich in OFDM-Übertragungssystemen auch dadurch erreichen, dass große Schutzbänder zu den im Frequenzbereich benachbarten Systemen vorgesehen bzw. Unterträger am Frequenzbereichsrand des OFDM-Übertragungssystems freigelassen werden. Das Verfahren, Unterträger am Frequenzbereichsrand freizulassen, d.h. nicht mit Datensymbolen zu belegen, wird beispielsweise in den Standards DAB ("Digital Audio Broadcasting")und DVB-T ("Digital Video Broadcasting - Terrestrial") verwendet. Diese bekannten Maßnahmen sind jedoch ineffizient und verschwenden die wertvolle Ressource Spektrum. Steht nur ein kleiner Frequenzbereich zur Übertragung zur Verfügung, macht es keinen Sinn, ein OFDM-Übertragungssystem in diesen Frequenzbereich zu legen, wenn große Schutzbänder vorzusehen sind oder Unterbänder freigelassen werden müssen.

Eine Unterdrückung spektraler Nebenzipfel in OFDM-Übertragungssystemen kann auch durch Pulsformung erfolgen. Anstelle des rechteckförmigen Impulses für das OFDM-Symbol im Zeitbereich können andere Pulsformen gewählt werden, die ein günstigeres Spektrum besitzen, d.h. ein Spektrum, dessen Nebenzipfel schneller abklingen. Beispiele für derartige Pulse sind Nyquist-Pulse, wie beispielsweise der "Raised Cosine"-Puls. Allerdings haben andere Pulsformen als der Rechteckpuls auch ziemliche Nachteile. Es vergrößert sich nämlich die zeitliche Ausdehnung des OFDM-Symbols, wodurch Symbolinterferenzen entstehen können. Darüber hinaus kann zur OFDM-Modulation und -Demodulation nicht mehr die aufwandsgünstige Realisierung mittels DFT/IDFT ("Discrete Fourier Transformation"/"Inverse Discrete Fourier Transformation") bzw. FFT/IFFT ("Fast Fourier Transformation"/"Inverse Fast Fourier Transformation") verwendet werden.

Der vorstehend beschriebene Stand der Technik zur Unterdrückung von spektralen Nebenzipfeln bei OFDM-Übertragungssystemen beruht auf Lehrbuchwissen und kann beispielsweise in dem Buch von Proakis, J.G.: "Digital Communications", New York: McGraw-Hill Inc., 1995 oder im Buch von van Nee, R.; Prasad, R.: "OFDM for Wireless Multimedia Communications", Boston: Artech House, 2000 nachgeschlagen werden.

Bei manchen OFDM-Übertragungssystemen besteht die Anforderung, kleine Frequenzbereiche zu nutzen. Diese Forderung ist beispielsweise beim Entwurf von auf OFDM basierenden "Overlay"-Übertragungssystemen aufgestellt. Ein "Overlay"-Übertragungssystem ist ein Kommunikationssystem, das im Spektrum eines anderen Übertragungssystems arbeiten und die dort ungenutzten Frequenzbereiche zur Übertragung nutzen darf.

Bei einem aus US-A-6 035 000 bekannten Verfahren werden in einem Mehrträger-Datenübertragungssystem sogenannte "Dummy Tones", also Fülltöne oder Füllbänder, zur Unterdrückung von Nebenaussendungen in eingeschränkten Frequenzbändern, z.B. geschützten Funkamateurbändern, verwendet. "Dummy Tones" sind spezielle Unterträger, die zumeist an den Rändern des Mehrträgerspektrums liegen und keine Daten tragen, sondern nur Gewichtungsfaktoren. "Dummy Tones" sind mit einer Linearkombination aus den Datensymbolen auf den einzelnen Unterträgern beladen.

Aus dem Artikel von Yoo H. et al: "Edge Sidelobe Suppressor Scheme for OFDMA Uplink Systems", IEEE Communications Letters, IEEE Service Center, Piscataway, NJ, USA, Band 7, Nr. 11, November 2003 (2003-11), Seiten 534-536, XP001185628 ISSN: 1089-7798, ist ein Verfahren zur Unterdrückung der Interferenzen zwischen einzelnen Nutzern in einem OFDMA-System bekannt, wobei diese Interferenzen durch einen Frequenz-Offset zwischen den Signalen einzelner Nutzer verursacht werden. Anstatt, wie üblich, einige Unterträger zwischen den Frequenzbändern verschiedener Nutzer freizulassen, werden auf diesen Unterträgern komplexe Gewichtungsfaktoren übertragen, welche die spektralen Nebenaussendungen des Signals eines Nutzers reduzieren. Auch hier sind die Gewichtungsfaktoren Linearkombinationen der Datensymbole, die mit Hilfe statistischer Aussagen über den Frequenz-Offset so bestimmt werden, dass die durch den betrachteten Nutzer verursachte Interferenz minimal wird. Es werden nur Unterträger gewichtet, die nicht zur Datenübertragung verwendet werden. Es werden also zusätzliche Unterträger benutzt, die in einem konventionellen OFDMA-Übertragungssystem frei gelassen werden.

In EP-A-1 422 897 wird ein hierzu gleichartiges Verfahren zur Unterdrückung der Interferenzen zwischen einzelnen Nutzern in einem OEDMA-Übertragungssystem beschrieben. Am oberen und unteren Rand des von einem Nutzer verwendeten Frequenzbands wird jeweils ein Unterträger eingefügt, der mit einem komplexen Gewichtungsfaktor beladen ist. Dieses Signal wird als "edge sidelobe cancelling signal" bezeichnet. Es werden nur Unterträger gewichtet, die nicht zur Datenübertragung verwendet werden. Es werden also zusätzliche Unterträger benutzt, die in einem konventionellen OFDMA-System freigelassen werden. Die Gewichtungsfaktoren für das "edge sidelobe cancelling signal" werden aus Linearkombinationen der Datensymbole bestimmt. Das Optimierungsziel ist hier die Minimierung der Interferenzen unter Berücksichtigung des Frequenz-Offsets.

Der vorliegenden Erfindung liegt nunmehr die Aufgabe zu Grunde, spektrale Nebenzipfel in OFDM-Übertragungssystemen und Mehrträger-Übertragungssystemen, die auf OFDM beruhen oder OFDM verwenden, zu unterdrükken oder zumindest erheblich zu reduzieren, ohne dass ein zusätzlicher Filteraufwand erforderlich wird und das OFDM-Sendesignal durch einen zu Störungen, insbesondere Symbolinterferenzen, führenden Filtervorgang beeinflusst wird. Bei der durch die Erfindung zu schaffenden Nebenzipfelunterdrückung soll darüber hinaus auch die wertvolle Ressource Spektrum ohne Verschwendung möglichst vollständig ausgenutzt werden, was insbesondere dann von hoher Bedeutung ist, wenn nur ein kleiner Frequenzbereich zur Übertragung verfügbar ist.

Gemäß der vorliegenden Erfindung, die sich auf ein Verfahren zur Unterdrückung spektraler Nebenzipfel in OFDM-Übertragungssystemen bzw. Mehrträger-Übertragungssystemen, die auf OFDM basieren, der eingangs genannten Art bezieht, wird diese Aufgabe in vorteilhafter Weise dadurch gelöst, dass im OFDM- bzw. Mehrträger-Übertragungssystem, das OFDM verwendet oder auf OFDM basiert, die Unterträger, die für die Übermittlung von Daten und gegebenenfalls zur Übermittlung von Pilot- und/oder Synchronisationssymbolen verwendet werden, mit reellen oder komplexen Gewichtungsfaktoren individuell multipliziert werden, die gemäß einem Optimierungskriterium bestimmt werden, das darin besteht, das Betragsquadrat des Sendesignals für eine bestimmte Anzahl von spektralen Nebenzipfeln oder über eine bestimmte Bandbreite zu minimieren.

Die Nebenzipfelunterdrückung in OFDM-Systemen und Mehrträger-Übertragungssystemen, die auf OFDM basieren, wird gemäß der vorliegenden Erfindung somit durch Gewichtung der Unterträger erreicht, wobei die Gewichtungsfaktoren gemäß einem Optimierungskriterium so bestimmt werden, dass die Nebenzipfel minimiert werden.

Die Gewichtungsfaktoren der Unterträger können in vorteilhafter Weise durch bestimmte Nebenbedingungen beschränkt werden. So kann zum Beispiel gewährleistet werden, dass durch die Gewichtung nicht mehr Leistung als für das ursprüngliche Übertragungssystem investiert werden muss. Weiterhin kann sichergestellt werden, dass jeder Unterträger mit einer bestimmten Mindestleistung übertragen wird. Wenn die Gewichtungsfaktoren auf reelle und positive Werte beschränkt werden, benötigt der Empfänger im Übertragungssystem keine Information über die Gewichtungsfaktoren. Durch Kombination des Optimierungskriteriums mit mehreren Nebenbedingungen kann die Leistungsfähigkeit des Systems weiter erhöht werden.

Das Verfahren nach der vorliegenden Erfindung weist gegenüber dem Stand der Technik eine Reihe von Vorteilen auf. Es werden weder Symbolinterferenzen noch andere Störungen erzeugt. Es werden lediglich sehr kleine Schutzbänder benötigt. DFT/IDFT bzw. FFT/IFFT können weiterhin zur OFDM-Modulation und -Demodulation verwendet werden.

Der einzige Nachteil, den das Verfahren nach der vorliegenden Erfindung aufweist, besteht darin, dass sich die Fehlerwahrscheinlichkeit für diejenigen Symbole leicht erhöhen kann, die mit Unterträgern übertragen werden, denen kleine Gewichtungsfaktoren zugewiesen worden sind.

Vorteilhafte Ausgestaltungen, Weiterbildungen und Verwendungen des erfindungsgemäßen Verfahrens zur Unterdrückung spektraler Nebenzipfel des Sendesignals in drahtlosen oder drahtgebundenen OFDM-Übertragungssystemen und in Mehrträger-Übertragungssystemen, die OFDM verwenden oder auf OFDM basieren, sind in den unmittelbar oder mittelbar auf den Patentanspruch 1 rückbezogenen Unteransprüchen angegeben.

Zum besseren Verständnis wird nachfolgend die vorliegende Erfindung anhand eines relativ einfachen Ausführungsbeispiels unter Bezugnahme auf die beigefügten Zeichnungen erläutert.
Es zeigen:

Fig.1 ein Spektrumsdiagramm eines gewöhnlichen OFDM-Sendesignals mit Unterträgerspektren sowie das Spektrum des Summensignals für ein OFDM-Übertragungssystem mit acht Unterträgern, und

Fig.2 in einer Diagrammdarstellung Leistungsdichtespektren des OFDM-Sendesignals ohne Gewichtungsfaktoren und des OFDM-Sendesignals mit Gewichtungsfaktoren im logarithmischen Maßstab.

Betrachtet wird ein OFDM-Übertragungssystem mit $N$=8 Unterträgern und BPSK-Modulation ("Binary Phase Shift Keying"-Modulation). BPSK bedeutet, dass binäre Übertragungssymbole $d_n$, $n$ =1,...,$N$, übertragen werden, d.h. es gilt $d_n \in \{+1,-1\}$ . Die Dauer eines BPSK-Symbols wird mit $T_s$ bezeichnet. Da ein OFDM-Symbol gleichzeitig $N$ BPSK-Symbole überträgt, beträgt die Dauer eines OFDM-Symbols $T=N \cdot T_s$. Die Unterträger im OFDM-Übertragungssystem werden von links nach rechts durchnummeriert, also nach aufsteigender Mittenfrequenz, wobei der Unterträger am linken Rand mit 1 und dessen Mittenfrequenz mit $f_1$ und der Unterträger am rechten Rand mit $N$ und dessen Mittenfrequenz mit $f_N$ bezeichnet wird. Die Unterträger werden im Folgenden mit $s_n(x)$, $n$=1,...,$N$, bezeichnet und lassen sich gemäß

$$s_n(x) = d_n \cdot \frac{\sin(x - x_n)}{x - x_n},\ n = 1,\ldots,N \quad (1)$$

darstellen, wobei $x=fT/\pi$ die normierte Frequenz bedeutet und $x_n= f_nT/\pi$ die normierte Mittenfrequenz des Unterträgers $n$ darstellt. Jeder Unterträger $s_n(x)$ wird mit einem Gewichtungsfaktor $g_n$ versehen, wodurch die gewichteten Unterträger $\overline{s}_n(x)$ entstehen

$$\overline{s}_n(x) = g_n \cdot s_n(x) = g_n \cdot d_n \cdot \frac{\sin(x - x_n)}{x - x_n},\ n = 1,\ldots,N. \quad (2)$$

Ferner wird für die betrachtete BPSK-Übertragung beispielhaft die Symbolfolge $\{d_1,..., d_N\}$ = {+1,...,+1} gewählt.

In Fig.1 ist das Spektrum der Einzelträger (gestrichelt) sowie das Spektrum des Summensignals (dicke durchgehende Linie) für eine OFDM-Übertragung mit $N$=8 Unterträgern ohne Verwendung von Gewichtungsfaktoren dargestellt. In diesem Beispiel liegt der erste Nebenzipfel im positiven Bereich der normierten Frequenz $x=fT/\pi$ zwischen $x$=4,5 und $x$=5,5. Entsprechendes gilt für den negativen Bereich der normierten Frequenz $x= fT/\pi$. Hier liegt der erste Nebenzipfel zwischen $x$=-5,5 und $x$=-4,5. Alle Nebenzipfel haben die gleiche normierte Breite $\Delta x$=1 im Frequenzbereich. Die Amplitude der Nebenzipfel nimmt mit wachsendem $|x|$ ab.

Um die mit dem Verfahren gemäß der vorliegenden Erfindung erzielte Nebenzipfelunterdrückung besser zu verdeutlichen, sind in Fig.2 die Leistungsdichtespektren des OFDM-Sendesignals ohne Gewichtungsfaktoren (durchgehende Linien) und des OFDM-Sendesignals mit Gewichtungsfaktoren (gestrichelte Linien) im logarithmischen Maßstab gegenübergestellt. Im betrachteten Beispiel wird eine Nebenzipfelunterdrückung von über 10 dB erzielt. Darüber hinaus klingen die Nebenzipfel des OFDM-Sendesignals mit Gewichtungsfaktoren wesentlich schneller ab als die Nebenzipfel des OFDM-Sendesignals ohne Gewichtungsfaktoren.

Nachdem gezeigt worden ist, dass durch Einführung von Gewichtungsfaktoren eine erhebliche Nebenzipfelunterdrückung erzielt werden kann, wird im Folgenden dargelegt, wie die Gewichtungsfaktoren geeignet bestimmt werden können, um eine möglichst gute Nebenzipfelunterdrückung zu realisieren.

Zur Bestimmung der Gewichtungsfaktoren $g_n$, $n$=1,...,$N$, wird ein Optimierungskriterium verwendet. Im vorliegenden Beispiel wird dafür das Betragsquadrat des Sendesignals für eine bestimmte Anzahl von Nebenzipfeln bzw. in einer bestimmten Bandbreite minimiert. Der Einfachheit halber wird in diesem Beispiel für die Optimierung der Bereich der ersten Nebenzipfel außerhalb der Übertragungsbandbreite gewählt

$$\int_{-5,5}^{-4,5} \left| \sum_{n=1}^{N} \overline{s}_n(x) \right|^2 dx \rightarrow \min, \quad (3)$$

$$\int_{4,5}^{5,5} \left| \sum_{n=1}^{N} \overline{s}_n(x) \right|^2 dx \rightarrow \min. \quad (4)$$

Bei der Berechnung können weitere Nebenbedingungen berücksichtigt werden. Beispielsweise kann gefordert werden, dass alle Gewichtungsfaktoren innerhalb eines bestimmten Bereiches liegen müssen, nämlich

$$g_{\min} < g_n < g_{\max},\ n = 1,\ldots,N, \quad (5)$$

der durch eine untere Grenze $g_{min}$ und eine obere Grenze $g_{max}$ festgelegt ist. Als weitere Nebenbedingung kann beispielesweise noch gefordert werden, dass sich die Gesamtübertragungsleistung durch die Gewichtung nicht verändern darf

$$\sum_{n=1}^{N}|d_n|^2 = \sum_{n=1}^{N}|g_n d_n|^2 \ . \qquad (6)$$

Die Gleichungen (3) und (4) mit den Nebenbedingungen (5) und/oder (6) können beispielsweise mittels des "Least Squares"-Ansatzes mit linearen Nebenbedingungen gelöst werden. Dies ist ein bekanntes mathematisches Problem, dessen Lösung in der einschlägigen Literatur nachgeschlagen werden kann, beispielsweise in P.E. Gill, W. Murray, and MH.H. Wright: "Practical Optimization", Academic Press, London UK, 1981.

Das Verfahren nach der vorliegenden Erfindung ist nicht auf das vorstehend beschriebene Ausführungsbeispiel beschränkt, sondern lässt sich auf folgende Fälle verallgemeinern:

- Das Verfahren gemäß der vorliegenden Erfindung ist nicht nur auf OFDM-Übertragungssysteme anwendbar, sondern auf alle Übertragungsverfahren, die auf OFDM beruhen, wie beispielsweise "Orthogonal Frequency-Division Multiple-Access" (OFDMA) und "Multi-Carrier Code-Division Multiple-Access" (MC-CDMA).

- Das Verfahren gemäß der vorliegenden Erfindung ist auf OFDM-Systeme oder Mehrträger-Übertragungssysteme, die auf OFDM beruhen, mit beliebiger Unterträgeranzahl $N$ anwendbar.

- Das Verfahren gemäß der vorliegenden Erfindung ist auf OFDM-Systeme oder Mehrträger-Übertragungssysteme, die auf OFDM beruhen, anwendbar, bei denen ein bestimmter Teil der Unterträger frei gelassen wird, wie beispielsweise im "Reverse-link" von OFDMA.

- Das Verfahren gemäß der vorliegenden Erfindung ist nicht auf die Gewichtung aller Unterträger beschränkt. Vielmehr kann auch nur eine bestimmte Anzahl der Unterträger gewichtet werden.

- Das Verfahren gemäß der vorliegenden Erfindung ist nicht auf die Gewichtung der Unterträger zur Übermittlung von Daten beschränkt. Vielmehr können auch andere Unterträger gewichtet werden, die beispielsweise zur Übermittlung von Pilot- und/oder Synchronisationssymbolen verwendet werden.

- Das Verfahren gemäß der vorliegenden Erfindung ist nicht auf BPSK beschränkt, sondern kann auf alle Modulationsverfahren erweitert werden, die in OFDM-Übertragungssystemen oder Mehrträger-Übertragungssystemen, die auf OFDM beruhen, verwendet werden.

- Das Verfahren gemäß der vorliegenden Erfindung beschränkt sich nicht auf die Verwendung von reellen Gewichtungsfaktoren. Vielmehr können die Gewichtungsfaktoren im allgemeinen abhängig vom Modulationsschema und/oder den Nebenbedingungen auch komplex sein.

- Das Verfahren gemäß der vorliegenden Erfindung beschränkt sich nicht auf die Unterdrückung je eines Nebenzipfels an den beiden Rändern des Sendesignalspektrums. Vielmehr kann die Optimierung der Gewichtungsfaktoren auf eine beliebige Bandbreite ausgedehnt werden.

- Das Verfahren gemäß der vorliegenden Erfindung beschränkt sich nicht auf die Verwendung des Optimierungskriteriums "Minimierung des Betragsquadrats des Sendesignals für eine bestimmte Anzahl von Nebenzipfeln".

- Das Verfahren gemäß der vorliegenden Erfindung beschränkt sich nicht auf die Verwendung der angegebenen Nebenbedingungen zur Optimierung. Vielmehr können einige oder alle der angegebenen Nebenbedingungen weggelassen und neue Nebenbedingungen hinzugenommen werden.

- Das Verfahren gemäß der vorliegenden Erfindung beschränkt sich nicht auf die Verwendung des "Least Squares"-Ansatzes zur Berücksichtigung der Nebenbedingungen. Vielmehr können auch andere Verfahren zur Berücksichtigung der Nebenbedingungen verwendet werden.

- Das Verfahren gemäß der vorliegenden Erfindung beschränkt sich nicht auf die Gewichtung des Signals im Frequenzbereich. Vielmehr kann die Gewichtung auch im Zeitbereich angewandt werden.

- Das Verfahren gemäß der vorliegenden Erfindung lässt sich auf einfache Weise mit anderen Verfahren zur Nebenzipfelunterdrückung kombinieren, beispielsweise mit den drei einleitend beschriebenen Verfahren entsprechend dem Stand der Technik. Dies ist möglich, da das Verfahren gemäß der vorliegenden Erfindung keine prinzipiellen Änderungen am OFDM-Übertragungssystem oder dem auf OFDM basierenden Mehrträger-Übertragungssystem erfordert. Das resultierende Übertragungssystem mit Auslöschungsunterträgern bleibt ein OFDM-Übertragungssystem oder ein auf OFDM basierendes Mehrträger-Übertragungssystem.

Das Verfahren nach der vorliegenden Erfindung kann bei allen auf OFDM beruhenden, drahtgebundenen Mehrträger-Übertragungssystemen eingesetzt werden, um dort eine Unterdrückung spektraler Nebenzipfel zu erzielen. Im Zusammenhang mit drahtgebundener Kommunikation wird OFDM häufig auch als "Discrete Multi-Tone (DMT) Modulation" bezeichnet. OFDM bzw. DMT wird bei der drahtgebunden Kommunikation häufig als Anschlussverbindung zu den Haushalten ("last mile") verwendet, um diese digital an die Außenwelt anzubinden. Die dazu existierenden verschiedenen Übertragungstechniken werden unter dem Begriff "Digital Subscriber Line" (DSL) zusammengefasst. DSL-Übertragungstechniken sind beispielsweise HDSL ("High-Speed Digital Subscriber Line"), ADSL ("Asymmetric Digital Subscriber Line") und SDSL ("Symmetric Digital Subscriber Line"). Die DSL-Übertragungstechniken sind Beispiele für den Anwendungsbereich des Erfindungsgedankens im Bereich der draht gebundenen Kommunikation. Ferner lässt sich das erfindungsgemäße Verfahren für OFDM-Systeme im Bereich "Power Line Communications" anwenden.

Das Verfahren gemäß der vorliegenden Erfindung kann auch bei allen auf OFDM beruhenden, drahtlosen Übertragungssystemen eingesetzt werden, um dort eine Unterdrückung spektraler Nebenzipfel zu erreichen. Die Anwendung hier umfasst sowohl bereits standardisierte, auf OFDM beruhende Systeme, wie beispielsweise DAB, DVB-T, WLAN entsprechend den Standards HIPERLAN/2 oder IEEE 802.11a/b/g oder MAN (Metropolitan Area Network) nach IEEE 802.16/802.16a, als auch neue Systeme, wie beispielsweise die auf OFDM basierenden MC-CDMA-Entwicklungen im Rahmen der "Vierten Generation Mobilfunk" (4G).

Das Verfahren nach der vorliegenden Erfindung ist auch in Verbindung mit sogenannten OFDM-basierten "Overlay"-Systemen von großem Interesse. Ein "Overlay"-System ist ein Übertragungssystem (Füllsystem), das im Frequenzband eines anderen Übertragungssystems (Hauptsystem) arbeitet und die dort aktuell brachliegenden Frequenzlücken nutzt. Besonders geeignet für "Overlay"-Systeme sind Systeme, die auf OFDM basieren, da diese durch Abschalten einzelner Unterträgergruppen Bereiche im Spektrum aussparen können, in denen das Hauptsystem gerade überträgt. Allerdings würden die starken Nebenzipfel eines Standard-OFDM-Verfahrens entweder das Hauptsystem stören oder es erforderlich machen, dass große Schutzbänder oder steilflankige Sendefilter verwendet werden müssen. Erst die Nebenzipfelunterdrückung gemäß der vorliegenden Erfindung ermöglicht somit eine effiziente Realisierung von "Overlay"-Systemen.

Das Verfahren nach der vorliegenden Erfindung ermöglicht also den Verzicht auf eine zusätzliche Filterung oder Pulsformung des Sendesignals und erlaubt die Verwendung kleinerer Schutzbänder.

Ferner ermöglicht das Verfahren nach der vorliegenden Erfindung die Realisierung von effizienten, auf OFDM basierenden "Overlay"-Systemen, die seit kurzem in der Forschung entwickelt werden, um eine bessere Ausnutzung der wertvollen Ressource Spektrum zu realisieren. Das potentielle Anwendungsgebiet für "Overlay"-Systeme reicht von der terrestrischen Funkübertragung über die aeronautische Kommunikation bis hin zur Satellitenkommunikation. Aktuell wird z.B. in einem EU-Projekt im 6. Rahmenprogramm an der Entwicklung eines "Overlay"-Systems für die zukünftige ATC ("Air Traffic Control") Kommunikation im VHF-Band gearbeitet.

## Patentansprüche

1. Verfahren zur Unterdrückung spektraler Nebenzipfel des Sendesignals in drahtlosen oder drahtgebundenen OFDM-Orthogonal Frequency-Division Multiplexing-Übertragungssystemen und in Mehrträger-Übertragungssystemen, die OFDM verwenden oder auf OFDM basieren, wobei Unterträger mit Gewichtungsfaktoren multipliziert werden, **dadurch gekennzeichnet, dass** im OFDM- bzw. Mehrträger-Übertragungssystem, das OFDM verwendet oder auf OFDM basiert, die Unterträger, die für die Übermittlung von Daten und gegebenenfalls zur Übermittlung von Pilot- und/oder Synchronisationssymbolen verwendet werden, mit reellen oder komplexen Gewichtungsfaktoren individuell multipliziert werden, die gemäß einem Optimierungskriterium bestimmt werden, das darin besteht, das Betragsquadrat des Sendesignals für eine bestimmte Anzahl von spektralen Nebenzipfeln oder über eine bestimmte Bandbreite zu minimieren.

2. Verfahren nach Anspruch 1, **dadurch gekennzeichnet, dass** bei der Bestimmung der Gewichtungsfaktoren eine Nebenbedingung berücksichtigt wird, die in der Gewährleistung besteht, dass durch die Gewichtung der Unterträger nicht mehr Leistung als für das ursprüngliche Übertragungssystem ohne Gewichtungsmaßnahmen investiert werden muss.

**3.** Verfahren nach Anspruch 2, **dadurch gekennzeichnet, dass** bei der Bestimmung der Gewichtungsfaktoren eine Nebenbedingung berücksichtigt wird, die darin besteht, dass jeder Unterträger mit einer bestimmten Mindestleistung übertragen wird.

**4.** Verfahren nach Anspruch 1, **dadurch gekennzeichnet, dass** bei der Bestimmung der Gewichtungsfaktoren eine Nebenbedingung berücksichtigt wird, die darin besteht, dass alle Gewichtungsfaktoren innerhalb eines bestimmten Bereiches liegen, der durch eine untere und eine obere Grenze festgelegt ist.

**5.** Verfahren nach einem der Ansprüche 1 bis 4, **dadurch gekennzeichnet, dass** die Gewichtungsfaktoren der Unterträger abhängig vom jeweiligen Modulationsschema und/oder von den in den Ansprüchen 2, 3 und/oder 4 angegebenen Nebenbedingungen komplex gewählt werden.

**6.** Verfahren nach einem der vorhergehenden Ansprüche, **gekennzeichnet durch** die Verwendung eines Modulationsverfahrens, das in OFDM-Übertragungssystemen oder Mehrträger-Übertragungssystemen verwendbar ist, die auf OFDM beruhen oder OFDM benutzen.

**7.** Verfahren nach Anspruch 6, **dadurch gekennzeichnet, dass** als Modulationsverfahren BPSK-Binary Phase Shift Keying verwendet wird.

**8.** Verfahren nach Anspruch 1, **dadurch gekennzeichnet, dass** das Betragsquadrat des Sendesignals für die ersten Nebenzipfel beidseitig außerhalb der Übertragungsbandbreite minimiert wird.

**9.** Verfahren nach Anspruch 2, 3 oder 4, **dadurch gekennzeichnet, dass** zur Berücksichtigung der Nebenbedingungen der "Least Squares"-Ansatz verwendet wird.

**10.** Verfahren nach einem der vorhergehenden Ansprüche, **gekennzeichnet durch** eine Gewichtung des Sendesignals im Frequenzbereich.

**11.** Verfahren nach einem der Ansprüche 1 bis 9, **gekennzeichnet durch** eine Gewichtung des Sendesignals im Zeitbereich.

**12.** Verfahren nach einem der vorhergehenden Ansprüche, **dadurch gekennzeichnet, dass** nicht alle Unterträger, die für die Übermittlung von Daten und gegebenenfalls zur Übermittlung von Pilot- und/oder Synchronisationssymbolen verwendet werden, gewichtet werden, sondern die Gewichtung nur auf einen bestimmten Teil dieser Unterträger angewandt wird.

**13.** Verfahren nach einem der vorhergehenden Ansprüche, **gekennzeichnet durch** eine Kombination mit einem oder mehreren anderen Verfahren zur Unterdrückung spektraler Nebenzipfel im betreffenden OFDM-Übertragungssystem bzw. im betreffenden Mehrträger-Übertragungssystem, das OFDM verwendet oder auf OFDM basiert.

**14.** Verfahren nach einem der vorhergehenden Ansprüche zur Verwendung im Rahmen einer auf OFDM beruhenden, drahtgebundenen digitalen Anschlussanbindung von Haushalten an die Außenwelt entsprechend den unter dem Begriff "Digital Subscriber Line"-DSL zusammengefassten verschiedenen Übertragungstechniken.

**15.** Verfahren nach einem der Ansprüche 1 bis 13 zur Verwendung im Rahmen eines drahtgebundenen digitalen OFDM-Übertragungssystems im Bereich "Power Line Communications".

**16.** Verfahren nach einem der Ansprüche 1 bis 13 zur Verwendung im Rahmen eines bereits standardisierten, auf OFDM beruhenden drahtlosen Übertragungssystems.

**17.** Verfahren nach einem der Ansprüche 1 bis 13 zur Verwendung in Verbindung mit einem sogenannten OFDM-basierten "Overlay"-Übertragungssystem, d.h. einem Übertragungssystem, das als Füllsystem im Frequenzband eines anderen, als Hauptsystem betriebenen Übertragungssystems arbeitet und die dort aktuell brachliegenden Frequenzlücken nutzt.

**18.** Verfahren nach Anspruch 17 zur Verwendung in einem terrestrischen, aeronautischen oder Satelliten-Funkkommunikationssystem.

## Claims

1. A method for eliminating spectral sidelobes of the transmission signal in wireless or hardwired OFDM - Orthogonal Frequency-Division Multiplexing - transmission systems and multi-carrier transmission systems which use OFDM or are based on OFDM, wherein subcarriers are multiplied by weighting factors,
**characterized in that**, in the OFDM and respectively multi-carrier transmission system which uses OFDM or is based on OFDM, the subcarriers used for the transmission of data and, as the case may be, for the transmission of pilot and/or synchronization symbols, are individually multiplied by real or complex weighting factors determined according to an optimization criterion which resides in minimizing the square of the absolute value of the transmission signal for a specific number of spectral sidelobes or across a specific bandwidth.

2. The method according to claim 1, **characterized in that**, in the determining of the weighting factors, a secondary condition is obeyed which resides in guaranteeing that the weighting of the subcarriers does not require that more power is invested than for the original transmission system without weighting measures.

3. The method according to claim 1, **characterized in that**, in the determining of the weighting factors, a secondary condition is obeyed which resides **in that** each subcarrier is transmitted with a specific minimum power.

4. The method according to claim 1, **characterized in that**, in the determining of the weighting factors, a secondary condition is obeyed which resides **in that** all weighting factors are within a specific range which is defined by an upper and a lower limit.

5. The method according to any one of claims 1 to 4, **characterized in that** the weighting factors of the subcarriers are selected to be complex, the selection being performed in dependence on the respective modulation scheme and/or the secondary conditions indicated in claims 2, 3 and/or 4.

6. The method according to any one of the previous claims, **characterized by** using a modulation method adapted for use in OFDM transmission systems or multi-carrier transmission systems which are based on OFDM or use OFDM.

7. The method according to claim 6, **characterized in that**, as a modulation method, use is made of BPSK Binary Phase Shift Keying.

8. The method according to claim 1, **characterized in that** the square of the absolute value of the transmission signal is minimized for the first sidelobes on both sides outside of the transmission band width.

9. The method according to claims 2, 3 or 4, **characterized in that**, for obeying the secondary condition, use is made of the "least squares" approach.

10. The method according to any one of the previous claims, **characterized by** weighting the transmission signal in the frequency range.

11. The method according to any one of claims 1 to 9, **characterized by** weighting the transmission signal in the time domain.

12. The method according to any one of the previous claims, **characterized in that** not all of the subcarriers used for the transmission of data and, as the case may be, for transmission of pilot and/or synchronization symbols, are weighted if the weighting is applied to only a specific part of these subcarriers.

13. The method according to any one of the previous claims, **characterized by** a combination with one or a plurality of other methods for eliminating spectral sidelobes in the respective OFDM transmission system and in the respective multi-carrier transmission system, respectively, which uses OFDM or is based on OFDM.

14. The method according to any one of the previous claims for use in the context of an OFDM-based, hardwired digital terminal connection of households to the external world corresponding to the various transmission techniques comprised under the term "digital subscriber line" DSL.

15. The method according to any one of claims 1 to 13 for use in the context of a hardwired digital OFDM transmission system in the field of "power line communications".

16. The method according to any one of claims 1 to 13 for use in the context of an already standardized OFDM-based wireless transmission system.

17. The method according to any one of claims 1 to 13 for use in connection with a so-called OFDM-based "overlay" transmission system, i.e. a transmission system which operates as a filling system in the frequency band of another transmission system operating as a main system, and which utilizes the frequency gaps that are presently idle in said other transmission system.

18. The method according to claim 17 for use in a terrestrial, aeronautical or satellite-based radio communication system.

**Revendications**

1. Procédé pour l'atténuation des lobes secondaires du signal d'émission dans des systèmes de transmission sans fil ou filaires OFDM (multiplexage par répartition orthogonale de la fréquence) et dans des systèmes de transmission à plusieurs porteuses qui emploient la modulation OFDM ou sont basés sur la modulation OFDM, dans lequel des sous-porteuses sont multipliées avec des facteurs de pondération, **caractérisée en ce que** dans le système de transmission OFDM ou dans le système de transmission à plusieurs porteuses qui emploie la modulation OFDM ou est basé sur la modulation OFDM, les sous-porteuses, qui sont employées pour transférer des données et, le cas échéant, pour transférer des symboles pilote ou des symboles de synchronisation, sont multipliées individuellement avec des facteurs de pondération réels ou complexes qui sont déterminés selon un critère d'optimisation qui consiste à minimiser le carré du niveau du signal d'émission pour un certain nombre de lobes secondaires dans le spectre ou pour une certaine largeur de bande.

2. Procédé selon la revendication 1, **caractérisé en ce qu'**il est tenu compte, lors de la détermination des facteurs de pondération, d'une condition secondaire qui consiste à garantir que pas plus de puissance ne doive être investie par la pondération des sous-porteuses que pour le système de transmission d'origine sans mesures de pondération.

3. Procédé selon la revendication 1, **caractérisé en ce qu'**il est tenu compte, lors de la détermination des facteurs de pondération, d'une condition secondaire qui consiste en ce que chaque sous-porteuse soit transmise avec une certaine puissance minimale.

4. Procédé selon la revendication 1, **caractérisé en ce qu'**il est tenu compte, lors de la détermination des facteurs de pondération, d'une condition secondaire qui consiste en ce que tous les facteurs de pondération soient situés à l'intérieur d'une certaine plage qui est définie par une limite inférieure et une limite supérieure.

5. Procédé selon une des revendications 1 à 4, **caractérisé en ce que** les facteurs de pondération sont choisis complexes pour les sous-porteuses. En fonction du schéma de modulation respectif et/ou des conditions secondaires indiquées dans les revendications 2, 3 et/ou 4.

6. Procédé selon l'une quelconque des revendications précédentes, **caractérisé par** l'emploi d'une méthode de modulation qui peut être employée dans des systèmes de transmission OFDM ou des systèmes de transmission à plusieurs porteuses qui reposent sur la modulation OFDM ou utilisent la modulation OFDM.

7. Procédé selon la revendication 6, **caractérisé en ce que** la méthode de modulation employée est la modulation par déplacement de phase binaire (BPSK).

8. Procédé selon la revendication 1, **caractérisé en ce que** le carré du niveau du signal d'émission pour les premiers lobes secondaires est minimisé de chaque côté en dehors de la largeur de bande de transmission.

9. Procédé selon la revendication 2, 3 ou 4, **caractérisé en ce que** l'estimation par les « moindres carrés » est employée pour tenir compte des conditions secondaires.

10. Procédé selon l'une quelconque des revendications précédentes, **caractérisé par** une pondération du signal d'émission dans le domaine fréquentiel.

11. Procédé selon l'une quelconque des revendications 3 à 9, **caractérisé par** une pondération du signal d'émission dans le domaine temporel.

**12.** Procédé selon l'une quelconque des revendications précédentes, **caractérisé en ce que** les sous-porteuses, qui sont employées pour le transfert de données et, le cas échéant, pour le transfert de symboles pilotes et/ou de symboles de synchronisation, ne sont pas toutes pondérées, mais au contraire la pondération n'est appliquée que sur une certaine partie de ces sous-porteuses.

**13.** Procédé selon l'une quelconque des revendications précédentes, **caractérisé par** une combinaison avec une ou plusieurs autres méthodes d'atténuation de lobes secondaires dans le système de transmission OFDM concerné ou dans le système de transmission à plusieurs porteuses concerné, qui emploie la modulation OFDM ou est basé sur la modulation OFDM.

**14.** Procédé selon l'une quelconque des revendications précédentes destiné à l'emploi dans le cadre d'un raccordement numérique filaire, reposant sur la modulation OFDM, de foyers au monde extérieur, conformément à diverses techniques de transmission regroupées sous le terme de « ligne d'accès numérique » (DSL).

**15.** Procédé selon une des revendications 1 à 13 destiné à l'emploi dans le cadre d'un système de transmission filaire OFDM dans le domaine des « communications par courants porteurs ».

**16.** Procédé selon une des revendications 1 à 13 destiné à l'emploi dans le cadre d'un système de transmission sans fil déjà standardisé, reposant sur la modulation OFDM.

**17.** Procédé selon une des revendications 1 à 13 destiné à l'emploi en conjonction avec ce que l'on appelle un système de transmission de « recouvrement », basé sur la modulation OFDM, c'est-à-dire un système de transmission qui travaille en tant que système de remplissage dans la bande de fréquences d'un autre système de transmission exploité en tant que système principal et qui y utilise les trous de fréquence momentanément inemployés.

**18.** Procédé selon la revendication 17 destiné à l'emploi dans un système de radiocommunication terrestre, aéronautique ou satellitaire.

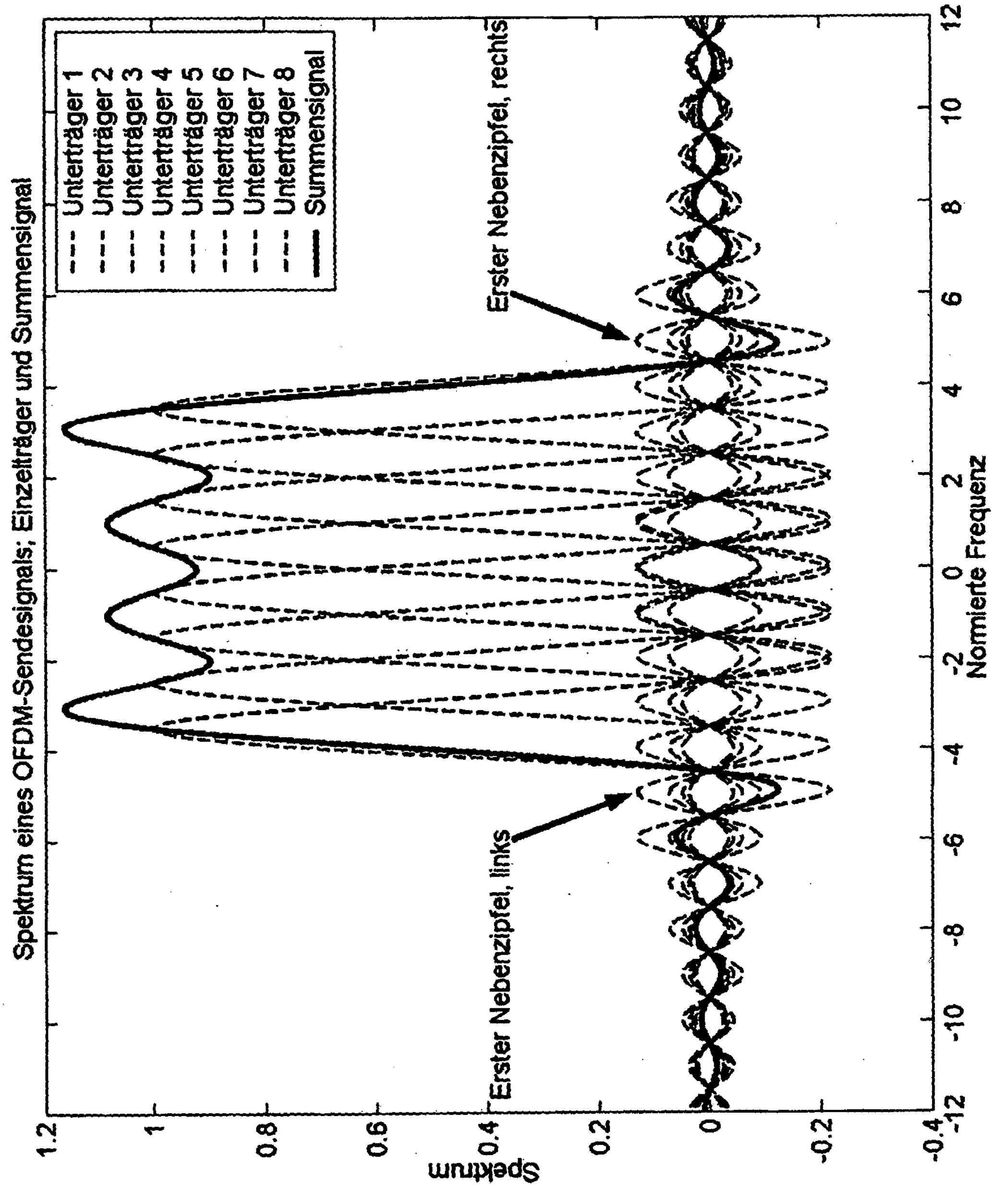
Spektrum eines OFDM-Sendesignals; Einzelträger und Summensignal
Unterträger 1
Unterträger 2
Unterträger 3
Unterträger 4
Unterträger 5
Unterträger 6
Unterträger 7
Unterträger 8
Summensignal
Erster Nebenzipfel, rechts
Erster Nebenzipfel, links
Spektrum
Normierte Frequenz

Fig.1

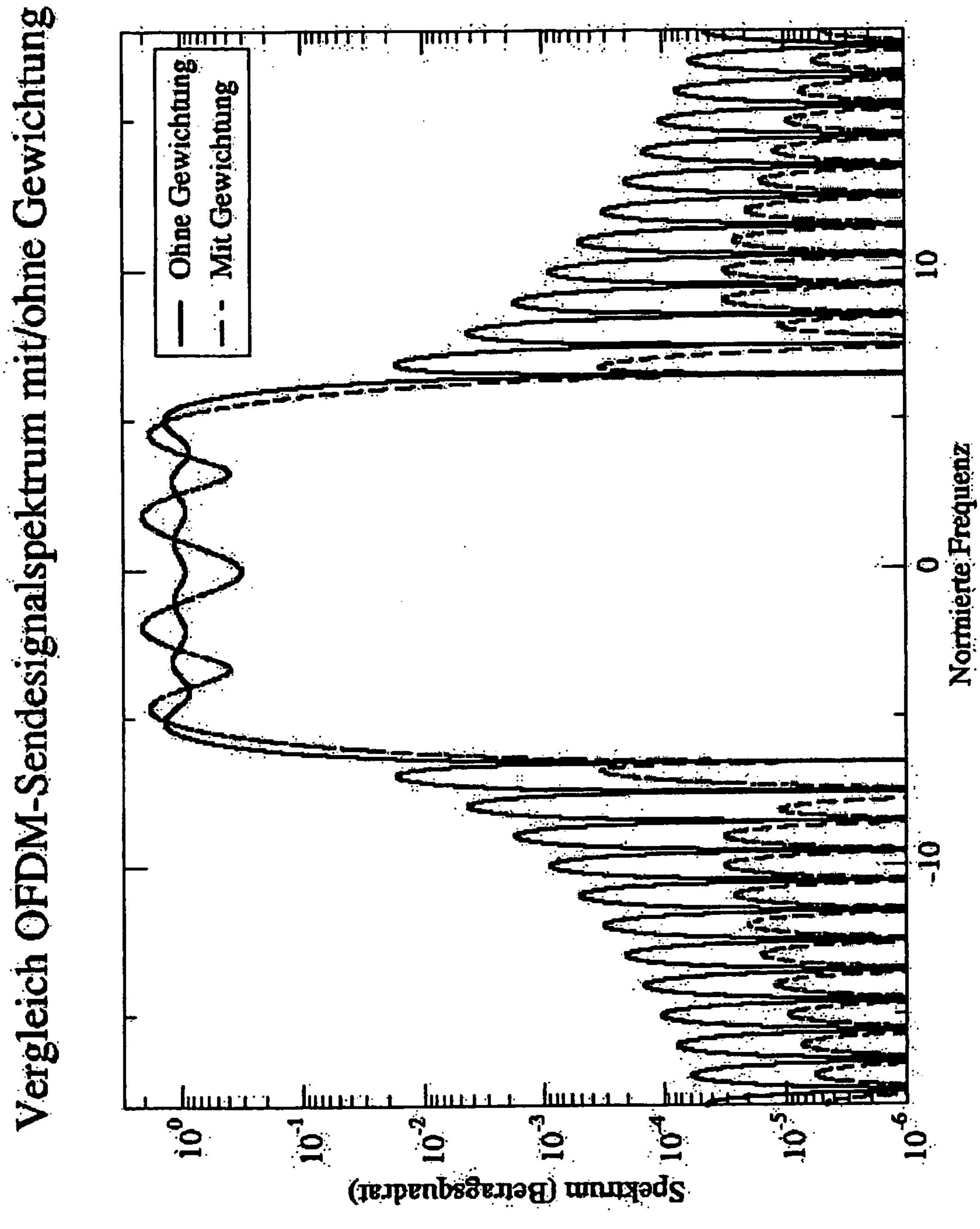
Vergleich OFDM-Sendesignalspektrum mit/ohne Gewichtung
Ohne Gewichtung
Mit Gewichtung
Spektrum (Betragsquadrat)
$10^0$
$10^{-1}$
$10^{-2}$
$10^{-3}$
$10^{-4}$
$10^{-5}$
$10^{-6}$
-10
0
10
Normierte Frequenz

Fig.2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6035000 A
- XP 001185628
- EP 1422897 A


### In der Beschreibung aufgeführte Nicht-Patentliteratur


- **PROAKIS, J.G.** Digital Communications. McGraw-Hill Inc, 1995
- **YOO H. et al.** Edge Sidelobe Suppressor Scheme for OFDMA Uplink Systems. *IEEE Communications Letters, IEEE Service Center,* November 2003, vol. 7 (11), 534-536
- **P.E. GILL ; W. MURRAY ; MH.H. WRIGHT.** Practical Optimization. Academic Press, 1981